# EUROPÄISCHE PATENTSCHRIFT

(11) **EP 2 670 647 B1**
(45) Veröffentlichungstag und Bekanntmachung des Hinweises auf die Patenterteilung: **09.12.2015**
(21) Anmeldenummer: 12700830.8
(22) Anmeldetag: 20.01.2012
(51) Int. Cl.: B61K 7/16, B65G 1/04

(54) **TRANSPORTSYSTEM**
TRANSPORTING SYSTEM
SYSTÈME DE TRANSPORT

(30) Priorität: 01.02.2011 DE 102011000447
(43) Veröffentlichungstag der Anmeldung: 11.12.2013
(73) Patentinhaber: Dematic Systems GmbH, 63150 Heusenstamm (DE)
(72) Erfinder: YAMASHITA, Shin, 63179 Obertshausen (DE)
(74) Vertreter: Moser Götze & Partner Patentanwälte mbB
(86) Internationale Anmeldenummer: PCT/EP2012/050826
(87) Internationale Veröffentlichungsnummer: WO 2012/104154

(56) Entgegenhaltungen:
- DE-A1- 2 242 922
- DE-A1- 19 500 503
- DE-C1- 19 742 102

## Beschreibung

Die Erfindung betrifft ein innerbetriebliches, schienengebundenes Transportsystem mit selbstfahrenden Fahrwagen, die auf Schienen fahren, wobei das System zur Sicherung gegen das Überfahren von offenen Schienenenden bzw. von Begrenzungen von Fahrwegen Stopper aufweist und mit Anschlägen versehen ist, wobei die Stopper zum Verhindern des Überfahrens gegen die Anschläge prellen, und wobei die Anschläge erste und zweite unbewegliche Anschlagelemente aufweisen.

Derartige Transportsysteme werden sowohl im Lager- als auch im Produktionsbereich verwendet und weisen selbstfahrende Fahrwagen auf. Hierbei handelt es sich meist um Einebeneregalbediengeräte bzw. sogenannte Shuttles oder Satellitenfahrzeuge, die im Lager- und Produktionsbereichen Güter mit oder ohne Behälter transportieren und ein- bzw. auslagern.

An den Enden der Schienenwege sind aus Sicherheitsgründen Puffer bzw. Anschläge vorgesehen, die die Fahrzeuge zurückhalten. Dies ist z.B. bei Fehlfunktionen wichtig, um einen Absturz etc. der Fahrzeuge oder auch die ungewollte Einfahrt der Fahrzeuge in bestimmte Schienenbereiche zu verhindern.

Aus dem nächstliegenden Stand der Technik DE 22 42 922 A1 ist ein innerbetriebliches, schienengebundenes Transportsystem mit selbstfahrenden Fahrwagen bekannt, die auf Schienen fahren, wobei das System zur Sicherung gegen das Überlaufen von offenen Schienenenden bzw. von Begrenzungen von Fahrwegen Stopper aufweist und mit Anschlägen versehen ist, wobei die Stopper zum verhindern des Überfahren gegen die Anschläge prellen, und wobei die Anschläge erste und zweite unbewegliche Anschlagelemente aufweist.

Aus der DE 37 34 068 C2 ist z.B. ein innerbetriebliches, schienengebundenes Transportsystem mit selbstfahrenden Fahrwagen, die in einem Schienensystem fahren, das ortsfeste Schienen sowie bewegliche Schienen, Verschiebewagen, Aufzüge, Drehtische usw. aufweist, bekannt. Gegen das Überfahren offener Schienenenden weisen die Fahrwagen wenigstens einen Stoßdämpfer und sowohl die ortsfesten als auch die beweglichen Schienen jeweils wenigstens ein Anschlagelement auf, die zwischen einer Betriebsstellung, in der sie den Fahrwagen durch Anlage des Stoßdämpfers stoppen, und einer Außerbetriebstellung bewegbar sind, in der sie die Durchfahrt des Fahrwagens ermöglichen. Die Überführung der Anschlagelemente aus der Betriebsstellung in die Außerbetriebstellung erfolgt durch eine Betätigungseinrichtung nur dann, wenn eine bewegliche Schiene derart zu der ortsfesten Schiene positioniert ist, daß ein Fahrwagen die Stoßstelle überfahren kann.

Es hat sich jedoch heraus gestellt, dass diese Art der Puffer bzw. Anschläge nicht in allen Fällen eine ausreichende Sicherheit bietet. Zudem ist deren Konstruktion insoweit aufwendig, als die schwenkbaren Anschlagelemente bzw. Hebel an jedem Schienenende vorgesehen sein müssen, was eine aufwendige Verkabelung und Ansteuerung sowie Überwachung mit sich bringt. Zudem muss noch überwacht werden, wie die beweglichen Schienen zu den ortsfesten Schienen positioniert sind. Auch ist unklar, was bei einer Störung der Anschlagelemente und deren Federn (z.B. Bruch) passiert, da dann die Einnahme der die Fahrwagen anhaltenden Stellung nicht gewährleistet ist. Desweiteren ist die Zugänglichkeit zu diesen Teilen und deren Wartung aufwendig und während des Anlagenbetriebes sehr schwierig, zumal die Fahrwege an die Fahrwagengröße angepasst und oft räumlich beengt sind.

Diese Aufgabe wird durch das in Anspruch 1 wiedergegebene Transportsystem gelöst.

Dadurch, dass die Anschläge erste und zweite unbewegliche Anschlagelemente aufweisen und dass die Stopper zwischen einer ersten Überfahrstellung und einer zweiten Überfahrstellung derart beweglich sind, dass die ersten Anschlagelemente in der ersten Überfahrstellung der Stopper überfahrbar sind, die zweiten Anschlagelemente in zweiten Überfahrstellung der Stopper überfahrbar sind und dass die ersten Anschlagelemente in der zweiten Überfahrstellung der Stopper nicht überfahrbar sind und dass die die zweiten Anschlagelemente in der ersten Überfahrstellung der Stopper nicht überfahrbar sind, ist es möglich, ein besonders sicheres System bereitzustellen, dass auch bei Versagen einer Komponente ein Überfahren verhindert.

Ein Überfahren der Schienenenden ist nämlich nach der Erfindung nur möglich, wenn die Stopper zweimal bewegt werden, wobei in der ersten Stellung lediglich das erste Anschlagelement überfahren werden kann, aber der Stopper an dem zweiten Anschlagelement anschlägt bzw. prellt. Erst durch die zweite Bewegung, d.h. die Zurückbewegung des Stoppers, kann dann auch das zweite Anschlagelement überfahren werden. Somit ist durch diese Redundanz sichergestellt, dass kein zufälliges Überfahren erfolgen kann.

Vorzugsweise sind die Stopper an den Fahrwagen und die Anschläge an den Schienen angeordnet.

Durch die Verwendung der unbeweglichen Anschläge an den Schienen muss lediglich eine ohne hin vorhandene Überwachung der Fahrwagen erfolgen. Die Anschläge sind rein passiv und daher überwachungsfrei. Bedingt durch die im Regalfall hohe Anzahl von benötigten Überfahrsperren sind die festen Anschläge sehr kostengünstig gegenüber bekannten Lösungen. Die Überwachung der Stopper an den Fahrwagen kann dabei von der Bordelektronik vorgenommen werden.

Zudem sind die Stopper vorzugsweise so ausgeführt, dass die zweite Überfahrstellung, also gewissermaßen die erste Prellstellung, z. B. federbeaufschlag bei einem Systemausfall von alleine selbsttätig eingenommen wird.

In einer bevorzugten Ausführungsform sind die ersten und zweiten Anschlagelemente in Längsrichtung des Schienenwegs, d.h. in Fahrtrichtung der Fahrzeuge auf der Schiene von einander beabstandet.

Dann ist es konstruktiv besonders einfach, die Stopper zwischen der ersten und der zweiten Überfahrstellung zu bewegen, z.B. durch eine Verschwenken um 90 Grad.

Daher ist es ebenfalls sinnvoll, wenn die Stopper als angetriebene Anschläge ausgebildet sind, die zwischen der ersten Überfahrstellung und einer zweiten Überfahrstellung beweglich sind und dann ggf. auch die angetriebenen Anschläge um eine in Fahrtrichtung ausgerichtete Schwenkachse beweglich sind. Dabei können die angetriebenen Anschläge um eine in Fahrtrichtung ausgerichtete Schwenkachse zwischen der ersten Überfahrstellung und einer zweiten Überfahrstellung um mindestens 20 Grad und maximal 90 Grad beweglich bzw. schwenkbar ausgeführt sein.

Um die Fahrwagen bei einem Aufprall der Stopper auf die Anschläge zu schonen, ist es bevorzugt, wenn die Stopper als beidseitig in Fahrtrichtung der Fahrzeuge gefederte Anschläge bzw. Stoßdämpfer ausgebildet sind. Somit wird der Aufprall abgefangen und der Fahrwagen bleibt unbeschädigt.

Ebenfalls ist es denkbar, die Wechselwirkung zwischen Stopper und Anschläge zum kontrollierten Abbremsen der Fahrzeuge zu verwenden, d.h. die kinetische Energie beim Aufprall nicht (nur) durch eine Stoßdämpfung zu vernichten, sondern durch Reibung. Dazu können die Stopper mit einem Bremsbelag versehen sein, der mit einer angeschrägten Bremsfläche an einem der Anschlagelemente zum Abbremsen des Fahrwagens in der entsprechenden nicht-Überfahrstellung wechselwirkt. Mit anderen Worten an dem angetriebenen Anschlag des Stoppers ist eine mit einem Bremsbelag versehene Fläche vorgesehen, die beim "Aufprall" auf den ortsfesten Anschlag an der Schiene bzw. dessen Anschlagelement an einer angeschrägten Bremsfläche reibt, wobei durch den schrägen Verlauf der Bremsfläche die Reibung stetig zu nimmt. Bevorzugterweise ist die angeschrägte Bremsfläche an dem ersten Anschlagelement angeordnet und verläuft etwa vertikal sowie bildet in Fahrtrichtung zum Schienenende hin eine seitlich zunehmende Schrägebene aus.

Eine bevorzugte Variante des Transportsystems umfasst eine Ausgestaltung, in der die Schienen als im Wesentlichen C-förmige Profilschienen ausgebildet sind, wobei die Öffnung des "C" nach innen und unten derart angeordnet ist, dass die an den Fahrzeugen angeordneten Stopper in das im Wesentlichen C-förmige Profil hineinragen und mit innerhalb des "C" angeordneten Anschlagelementen wechselwirken kann. Somit können die Anschlagelemente "in der Schiene versteckt" werden und der Fahrwagen auf der Schienenoberseite fahren.

Das beschriebene Transportsystem eignet sich besonders zum Einsatz in Lager- und Transportsystemen mit Einebenenregalbediengeräten bzw. sogenannten Shuttles oder mit Satellitenfahrzeugen. Als Einebenenregalbediengeräte kommen z.B. sogenannte MultiShuttle ® zum Einsatz. Diese sind z. B. in der EP 1 254 852 A1 beschrieben.

Das Systemkonzept basiert auf autonomen, schienengeführten Fahrwagen zum Lagergut- oder Behältertransport, die innerhalb und außerhalb des Lagersystems verkehren. Das System verfügt über Fahrschienen, die in jeder Ebene des Lagers entlang der Lagerfächer in einer Ebene bzw. in mehreren Ebenen aufgeständert oder abgehangen in der Vorzone installiert sind. Im Falle der Multishuttle wechseln die Fahrwagen über hochdynamische Lifte ggf. die Ebenen. Entsprechendes gilt auch für mögliche Varianten anderer Fahrwagen.

In einer weiteren Variante fährt das Shuttle oder Satellitenfahrzeug von einem Umsetzgerät wie z.B. einem Regalbediengerät in die verschiedenen Fächer eines Lagersystems. Das Umsetzen innerhalb der Lagergasse selbst erfolgt dann über ein Umsetzgerät, welches das jeweilige Lagerfach anfährt. Das Shuttle selbst fährt dann in das Lagerfach ein, wo es die Ladung abgibt oder wieder aufnimmt und dann wieder auf das Umsetzgerät fährt. Auch in diesem Fall sind am Ende des Fahrweges die Anschläge vorgesehen, um den Fahrweg zu begrenzen und einen Absturz zu verhindern.

In vielen Fällen kann die Leistung des Gesamtsystems durch Hinzufügen weiterer Fahrwagen nach Bedarf skaliert werden, was diese Lösung sehr wirtschaftlich macht.

Es ist im Rahmen der Erfindung klar, dass überall dort, wo die Schienenwege aus Sicherheitsgründen oder aus technischen Gründen oder auch zum Steuern und Kontrollieren des Ablaufs entsprechende Überfahrsperren benötigen, erfindungsgemäße Anschläge bzw. Stopper an den Fahrwegen vorgesehen sein können.

Weitere Einzelheiten, Merkmale und Vorteile der Erfindung ergeben sich aus der nachfolgenden Beschreibung von Ausführungsbeispielen anhand der Zeichnung, in der
Fig. 1 eine schematische Ansicht eines Fahrwagens an einem Schienenendstück in der Ansicht von vorne;
Fig. 2 eine Seitenansicht auf den Stopper des Fahrwagens aus Figur 1;
Fig. 3 eine Draufsicht auf den Stopper des Fahrwagens aus Figur 1 und
Fig. 4 eine Figur 1 entsprechende Ansicht einer alternativen Ausführungsform.

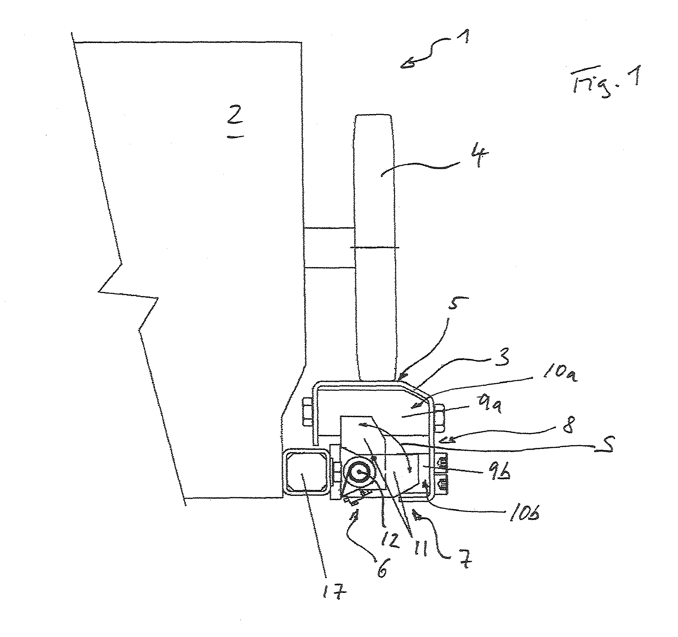

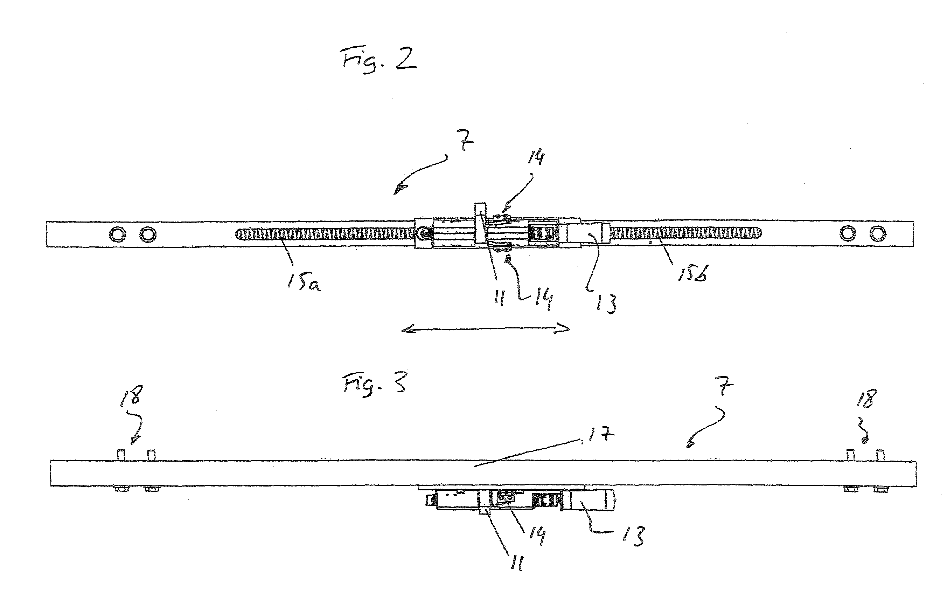

In den Figuren 1 bis 3 ist ein als Ganzes mit 1 bezeichnetes Shuttle bzw. der Satellit eines Lager- und Transportsystems dargestellt, das Güter und/oder Behälter wechselnder Größe entlang des Fahrwegs befördert. Es umfasst dazu ein nicht dargestelltes Lastaufnahmemittel, das die Güter und/oder Behälter aufnimmt oder abgibt. Der Laderaum des Shuttles 1 liegt zwischen einem Vorder- und Hinterbereich, deren Abstand zu einander entsprechend des transportierten Guts einstellbar ist. Im Vorderbereich bzw. Hinterbereich ist das Gehäuse 2 jeweils kastenartig ausgebildet und nimmt die Bordelektronik, Super-Kondensatoren für die kurzfristige Stromversorgung und zur Abdeckung von Leistungsspitzen, Funktechnik etc. auf.

Die eigentliche Stromversorgung und Aufladung der Super-Kondensatoren erfolgt über Stromabnehmer, die eine Schleifleitung "abgreifen". Die Schleifleitung ist üblicherweise entweder eine gesonderte Leitung oder durch die Fahrschiene 3 gebildet.

Die Fahrschiene 3 wird von zwei parallelen den Fahrweg seitlich begrenzenden Schienen gebildet. In den Figuren ist jeweils nur eine Seite davon abgebildet, da die Seiten entsprechend ausgestaltet sind.

Auf der Fahrschiene 3 läuft das Shuttle mit vier Rädern 4, je zwei Räder pro Seite.

Die eigentliche Lauffläche 5 für die Räder 4 wird durch die Oberseite der Schiene 3 ausgebildet.

Die Schienen 3 sind als im Wesentlichen C-förmige Profilschienen ausgebildet, wobei die Öffnung 6 des "C" nach innen und unten derart angeordnet ist, dass die an den Shuttle 1 beidseitig angeordneten Stopper 7 in das im Wesentlichen C-förmige Profil hineinragen und mit innerhalb des "C" angeordneten Anschlagelementen 9 der Anschläge 8 wechselwirken können.

Die Anschläge 8 sind ortsfest an die Schiene 3 angeschraubt und werden von einem ersten Anschlagelement 9a und einem zweiten Anschlagelement 9b ausgebildet, die in Fahrtrichtung, also in Längsrichtung des Schienenwegs, voneinander beabstandet sind und zu einander versetzte Anschlagflächen 10a, b für die Stopper 7 ausbilden.

Das erste Anschlagelement 9a befindet sich in Längsrichtung und Fahrtrichtung des Shuttle 1 vor dem zweiten Anschlagelement 9b.

Das erste Anschlagelement 9a ist im oberen Bereich des Innenraums der Schiene 3 angeordnet und erstreckt sich komplett zwischen den Seitenwänden der Schiene 3.

Das zweite Anschlagelement 9b ist als Block an der Innenseite der Außen liegenden Seitenwand der Schiene 3 im unteren Bereich geschraubt und ragt in etwa um ein Drittel der Breite des Innenraums der Schiene 3 in diesen hinein.

Die Stopper 7 sind als angetriebene Anschläge ausgebildet, die jeweils einen angetriebenen Anschlag 11 aufweisen, der z.B. durch ein Blech gebildet sein kann und der zwischen der ersten Überfahrstellung und einer zweiten Überfahrstellung um eine in Fahrtrichtung ausgerichtete Schwenkachse 12 beweglich ist.

Der angetriebene Anschlag 11 ist dabei um die in Fahrtrichtung ausgerichtete Schwenkachse 12 zwischen der ersten Überfahrstellung und einer zweiten Überfahrstellung um 90 Grad beweglich.

In der ersten Überfahrstellung steht der Anschlag 11 etwa waagerecht und in der zweiten Überfahrstellung etwa senkrecht. Dabei ist er so bemessen, dass er in der ersten Überfahrstellung das erste Anschlagelement 9a überfahren kann und das zweite Anschlagelement 9b (bzw. dessen Anschlagfläche 10b) kontaktiert und in der zweiten Überfahrstellung das zweite Anschlagelement 9b überfahren kann und das erste Anschlagelement 9a (bzw. dessen Anschlagfläche 10a) kontaktiert, wenn das Shuttle 1 entlang des Schiene 3 in fährt und dabei auf die Anschläge 8 "trifft".

Um die Schwenkbewegung (angedeutet durch den Pfeil S in Figur 1) des jeweiligen Anschlags 11 auszuführen ist ein Elektromotor 13 vorgesehen, der beim Erreichen der jeweiligen Überfahrstellung durch Betätigung eines entsprechend platzierten Schalters 14 abgeschaltet wird.

In einem weiteren Anwendungsfall, insbesondere wenn das Fahrzeug den Fahrbereich nur in Ausnahmefällen wie zu Reparatur verlässt, kann die Schwenkbewegung auch durch ein manuelles Betätigungselement erfolgen.

Dabei ist der Anschlag 11 des Stoppers 7 beidseitig in Fahrtrichtung der Fahrzeuge mittels einer Feder 15a, b gefedert. Der Anschlag 11 und seine Mechanik sind dazu auf einer eine Art Schlitten ausbildenden Plattform 16 angeordnet, die innerhalb eines etwa im Querschnitt quadratischen Profils 17 längsverschiebbar angeordnet ist. Dabei ist die Verschiebung längs des Profils 17 durch die in Innern des Profils angeordnete Feder 15 gedämpft.

Dies Art der Bauweise hat zudem den Vorteil, dass die Stopper 7 somit als Baugruppe an die Shuttle beidseitig befestigbar sind, wozu der Stopper jeweils entsprechende Schraubbolzen 18 an den Enden des Profils 17 aufweist.

Die Funktionsweise ist im betrieb die folgende:
Das Shuttle 1 bewegt sich in Fahrtrichtung längs der Schiene 3, also in Blickrichtung auf die Figur 1, und soll aus welchen Gründen auch immer den Anschlag 8 kontrolliert überfahren. Dazu wird beim Erreichen des ersten Anschlagelements 9a der Anschlag 11 um 90 Grad aus der Senkrechten in die Waagerechte nach unten verschwenkt, so dass das erste Anschlagelement 9a passiert werden kann. Anschließend wird der Anschlag 11 beim Erreichen des zweiten Anschlagelements 9b nach Überwinden des Abstands der beiden Anschlagelemente um 90 Grad nach oben in die Senkrechte zurückverschwenkt, so dass das zweite Anschlagelement 9b passiert werden kann.

Dieser Vorgang ist kontrolliert und erfordert zwei bestimmte Bewegungen der Stopper 7, um das Shuttle 1 passieren zu lassen.

Beim Auftreten einer Störung wären diese beiden koordinierten Bewegungen des Anschlags 11 zum jeweiligen Überwinden der Anschlagelemente 9a, b nicht gegeben, so dass das Shuttle 1 an dem Anschlag 8 "festgehalten" würde.

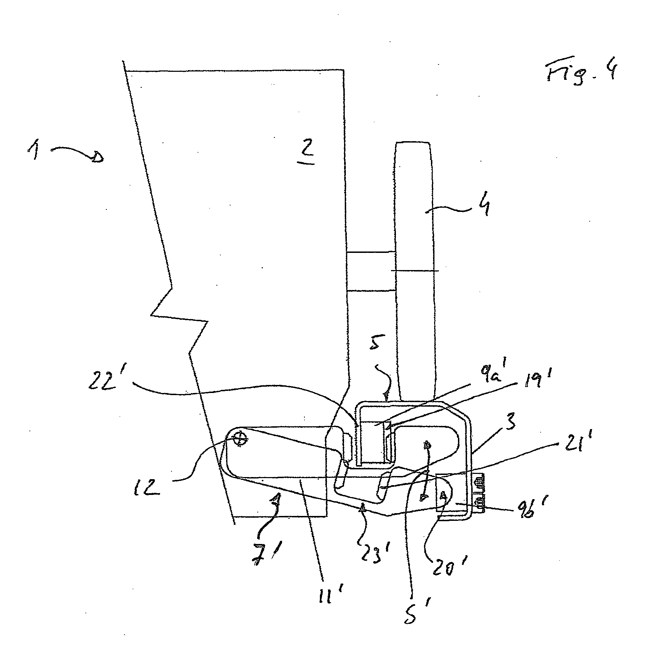

In der Figur 4 ist eine alternative Ausführungsform der Stopper und Anschläge abgebildet, wobei der Aufbau der Shuttle 1 und Schienen 3 der obigen Ausführungsform entsprechen. Zur Vermeidung von Wiederholungen wird daher nur auf Unterschiede eingegangen

Das erste Anschlagelement 9a' ist nun analog des ersten Anschlagelements 9a ausgestaltet, aber nur an der Innenseite der Innen liegenden Seitenwand der Schiene 3 im oberen Bereich angeschraubt und ragt in etwa um ein Drittel der Breite des Innenraums der Schiene 3 in diesen hinein.

Im Unterschied zur obigen Ausführungsform (bzw. dem zweiten Anschlagelement 9b') besitzt das erste Anschlagelement 9a' zudem eine angeschrägte Bremsfläche 19'.

Die Bremsfläche 19' verläuft etwa vertikal und ist durch eine in Fahrtrichtung zum Schienenende hin eine seitlich zunehmende Schrägebene ausgebildet.

Der Stopper 7' ist als ein um eine Schenkachse 12' beweglicher Hebel 11' ausgebildet, der ausgestaltet und bemessen ist, um mit seiner Spitze 20' das zweite Anschlagelement 9b' zu kontaktieren. Zum Zusammenwirken mit der Bremsfläche 19' weist der Hebel 11' einen Bremsbelag 21' auf, der in einer U-förmigen Ausnehmung 23' in Hebel 11' angeordnet ist, mit dem der Hebel 11' die Befestigungswandung 22' des ersten Anschlagelements 9a' des Schiene 3' umgreift. Dazu ist der Bremsbelag 21' an einem etwa vertikal verlaufenden Schenkel des U der Ausnehmung 23' - in der zweiten Überfahrstellung besehen - angeordnet, so dass er mit der angeschrägten Bremsfläche 19' zum Abbremsen des Shuttle in der entsprechenden nicht-Überfahrstellung bzw. zweiten Überfahrstellung wechselwirkt, wobei die Reibung mit zunehmender "Fahrstrecke" durch die Abschrägung zunimmt. Zum Verschwenken zwischen den beiden Stellungen des Hebels 11' reicht eine Schwenkbewegung S' um etwa 20 Grad aus.

Somit dämpft diese so gebildete Bremsfunktion das Shuttle 1 kontrolliert ab und es kann ggf. auf die Federanordnung der obigen Ausführungsform verzichtet werden.

### Bezugszeichenliste

- 1: Shuttle
- 2: Gehäuse
- 3: Fahrschiene
- 4: Räder
- 5: Lauffläche
- 6: Öffnung
- 7: Stopper
- 7': Stopper
- 8: Anschläge
- 9: Anschlagelemente
- 9a, 9a': erstes Anschlagelement
- 9b, 9b': zweites Anschlagelement
- 10: Anschlagflächen
- 10a: erste Anschlagfläche
- 10b: zweite Anschlagfläche
- 11: angetriebener Anschlag
- 11': Hebel
- 12, 12': Schwenkachse
- 13: Elektromotor
- 14: Schalter
- 15: Feder
- 16: Plattform
- 17: Profil
- 18: Schraubbolzen
- 19': Bremsfläche
- 20': Spitze
- 21': Bremsbelag
- 22': Befestigungswandung
- 23': U-förmige Ausnehmung
- S, S': Schwenkbewegung

## Patentansprüche

1. Innerbetriebliches, schienengebundenes Transportsystem mit selbstfahrenden Fahrwagen (1), die auf Schienen (3) fahren, wobei das System zur Sicherung gegen das Überfahren von offenen Schienenenden bzw. von Begrenzungen von Fahrwegen Stopper (7) aufweist und mit Anschlägen (8) versehen ist, wobei die Stopper (7) zum Verhindern des Überfahrens gegen die Anschläge (8) prellen,
wobei
die Anschläge (8) erste und zweite unbewegliche Anschlagelemente (9a,b) aufweisen **dadurch gekennzeichnet, dass** die Stopper (7) zwischen einer ersten Überfahrstellung und einer zweiten Überfahrstellung derart beweglich sind, dass
die ersten Anschlagelemente (9a) in der ersten Überfahrstellung der Stopper (7) überfahrbar sind, die zweiten Anschlagelemente (9b) in zweiten Überfahrstellung der Stopper (7) überfahrbar sind und dass die ersten Anschlagelemente (9a) in der zweiten Überfahrstellung der Stopper (7) nicht überfahrbar sind und dass die zweiten Anschlagelemente (9b) in der ersten Überfahrstellung der Stopper (7) nicht überfahrbar sind.

2. Transportsystem nach Anspruch 1, **dadurch gekennzeichnet, dass** die Stopper (7) an den Fahrwagen (1) und die Anschläge (8) an den Schienen (3) angeordnet sind.

3. Transportsystem nach Anspruch 1 oder 2, **dadurch gekennzeichnet, dass** die ersten und zweiten Anschlagelemente (9a, b) in Längsrichtung des Schienenwegs (3) von einander beabstandet sind.

4. Transportsystem nach einem der vorhergehenden Ansprüche, **dadurch gekennzeichnet, dass** die Stopper (7) als angetriebene Anschläge (11) ausgebildet sind, die zwischen der ersten Überfahrstellung und einer zweiten Übenfahrstellung beweglich sind.

5. Transportsystem nach Anspruch 4, **dadurch gekennzeichnet, dass** die angetriebenen Anschläge (11) um eine in Fahrtrichtung ausgerichtete Schwenkachse (12) beweglich sind.

6. Transportsystem nach Anspruch 4 oder 5, **dadurch gekennzeichnet, dass** die angetriebenen Anschläge (11) um eine in Fahrtrichtung ausgerichtete Schwenkachse (12) zwischen der ersten Überfahrstellung und einer zweiten Überfahrstellung um mindestens 20 Grad und maximal 90 Grad beweglich sind.

7. Transportsystem nach einem der vorhergehenden Ansprüche, **dadurch gekennzeichnet, dass** die Stopper (7) als beidseitig in Fahrtrichtung der Fahrzeuge gefederte Anschläge (11) ausgebildet sind.

8. Transportsystem nach einem der Ansprüche 1 bis 7, **dadurch gekennzeichnet, dass** die Stopper (7') mit einem Bremsbelag (21') versehen sind, der mit einer angeschrägten Bremsfläche (19') an einem der Anschlagelemente (9a') zum Abbremsen des Fahrwagens (1) in der entsprechenden nicht-Überfahrstellung wechselwirkt.

9. Transportsystem nach Anspruch 8, **dadurch gekennzeichnet, dass** die angeschrägte Bremsfläche (21') an dem ersten Anschlagelement (9a') angeordnet ist und etwa vertikal verläuft sowie durch eine in Fahrtrichtung zum Schienenende hin seitlich zunehmende Schrägebene (21') ausgebildet ist.

10. Transportsystem nach einem der vorhergehenden Ansprüche 2 - 9, **dadurch gekennzeichnet, dass** die Schienen als im Wesentlichen C-förmige Profilschienen (3) ausgebildet sind, wobei die Öffnung (6) des "C" nach innen und unten derart angeordnet ist, dass die an den Fahrwagen (1) angeordneten Stopper (7) in das im Wesentlichen C-förmige Profil hineinragen und mit innerhalb des "C" angeordneten Anschlagelementen (9a, b) wechselwirken können.

## Claims

1. An in-house, rail-mounted transport system with self-propelled carriages (1), which run on rails (3), wherein the system includes stoppers (11) to prevent riding over open track ends or boundaries of tracks, and is provided with abutments (8), wherein the stoppers (7) collide with the abutments (8) to prevent crossing over, wherein the abutments (8) include first and second immovable abutment elements (9a, b), **characterised in that** the stoppers (7) are movable between a first riding over position and a second riding over position such that the first abutment elements (9) may be ridden over in the first riding over position of the stoppers (7), the second abutment elements (9b) may be ridden over in the second riding over position of the stoppers (7) and that the first abutment elements (9a) may not be ridden over in the second riding over position of the stoppers (7) and that the second abutment elements (9b) may not be ridden over in the first riding over position of the stoppers (7).

2. A transport system as claimed in Claim 1, **characterised in that** the stoppers (7) are arranged on the carriages (1) and the abutments (8) are arranged on the rails (3).

3. A transport system as claimed in Claim 1 or 2, **characterised in that** the first and second abutment elements (9a, b) are spaced from one another in the longitudinal direction of the trackway (3).

4. A transport system as claimed in one of the preceding claims, **characterised in that** the stoppers (7) are constructed in the form of driven abutments (11), which are movable between the first riding over position and a second riding over position.

5. A transport system as claimed in Claim 4, **characterised in that** the driven abutments (11) are movable about a pivotal axis (12) aligned in the direction of movement.

6. A transport system as claimed in Claim 4 or 5, **characterised in that** the driven abutments (11) are movable about a pivotal axis (12) aligned in the direction of movement between the first riding over position and a second riding over position through at least 20 degrees and at most 90 degrees.

7. A transport system as claimed in one of the preceding claims, **characterised in that** the stoppers (7) are constructed in the form of spring-loaded abutments (11) on both sides in the direction of movement of the carriages.

8. A transport system as claimed in one of Claims 1 to 7, **characterised in that** the stoppers (7') are provided with a brake lining (21'), which cooperates with a chamfered braking surface (19') on one of the abutment elements (9a') for braking the vehicle (1) in the corresponding non-riding over position.

9. A transport system as claimed in Claim 8, **characterised in that** the chamfered braking surface (21') is arranged on the first abutment element (9a') and extends approximately vertically and is defined by an oblique plane (21') rising laterally in the direction of movement towards the rail end.

10. A transport system as claimed in one of the preceding Claims 2-9, **characterised in that** the rails are constructed in the form of substantially C-shaped profile rails (3), wherein the opening (6) of the "C" is arranged inwardly and downwardly such that the stoppers (7) arranged on the carriages (1) project into the substantially C-shaped profile and can cooperate with abutment elements (9a, b) arranged within the "C".

## Revendications

1. Système de transport sur rails en circuit fermé comprenant des chariots automoteurs (1) qui se déplacent sur des rails (3), le système comportant des éléments d'arrêt (7) servant à empêcher des chariots de franchir des extrémités de rail ouvertes ou des limitations, et étant équipé de butées (8), les éléments d'arrêt (7) rebondissant pour empêcher le franchissement des butées (8),
les butées (8) comportant des premier et second éléments de butée fixes (9a, b), **caractérisé en ce que** les éléments d'arrêt (7) étant mobiles entre une première position de franchissement et une seconde position de franchissement de telle sorte que les premiers éléments de butée (9a) peuvent être franchis dans la première position de franchissement des éléments d'arrêt (7), les seconds éléments de butée (9b) peuvent être franchis dans la seconde position de franchissement des éléments d'arrêt (7) et **en ce que** les premiers éléments de butée (9a) ne peuvent pas être franchis dans la seconde position de franchissement des éléments d'arrêt (7) et **en ce que** les seconds éléments de butée (9b) ne peuvent pas être franchis dans la première position de franchissement des éléments d'arrêt (7).

2. Système de transport selon la revendication 1, **caractérisé en ce que** les éléments d'arrêt (7) sont disposés sur les chariots (1) et les butées (8) sont disposées sur les rails (3).

3. Système de transport selon la revendication 1 ou 2, **caractérisé en ce que** les premier et second éléments de butée (9a, b) sont espacés l'un de l'autre dans la direction longitudinale du chemin de rail (3).

4. Système de transport selon l'une des revendications précédentes, **caractérisé en ce que** les éléments d'arrêt (7) sont configurés en butées entraînées (11) qui sont mobiles entre la première position de franchissement et une seconde position de franchissement.

5. Système de transport selon la revendication 4, **caractérisé en ce que** les butées entraînées (11) sont mobiles sur un axe de pivotement orienté dans la direction de roulement (12).

6. Système de transport selon la revendication 4 ou 5, **caractérisé en ce que** les butées entraînées (11) sont mobiles sur au moins 20 degrés et au maximum 90 degrés sur un axe de pivotement (12) orienté dans la direction de roulement entre la première position de franchissement et une seconde position de franchissement.

7. Système de transport selon l'une des revendications précédentes, **caractérisé en ce que** les éléments d'arrêt (7) sont configurés en butées (11) montées sur ressort des deux côtés dans la direction de déplacement des chariots.

8. Système de transport selon l'une des revendications 1 à 7, **caractérisé en ce que** les éléments d'arrêt (7') sont équipés d'une garniture de freinage (21') qui interagissent avec une surface de freinage oblique (19') au niveau de l'un des éléments de butée (9a') pour freiner le chariot (1) dans la position de non-franchissement correspondante.

9. Système de transport selon la revendication 8, **caractérisé en ce que** la surface de freinage oblique (21') est disposée au niveau du premier élément de butée (9a') et s'étend sensiblement verticalement et est formé par un plan oblique (21') croissant latéralement vers l'extrémité de rail dans la direction de roulement.

10. Système de transport selon l'une des revendications précédentes 2 à 9, **caractérisé en ce que** les rails sont configurés en rails profilés (3) sensiblement en forme de C, l'ouverture (6) du « C » étant disposée vers l'intérieur et vers le bas de sorte que les éléments d'arrêt (7), disposés au niveau des chariots (1), font saillie dans le profilé sensiblement en forme de C et peuvent interagir avec des éléments de butée (9a, b) disposés à l'intérieur du « C ».
